(19) Europäisches Patentamt / European Patent Office / Office européen des brevets

(11) **EP 4 679 603 A1**

(12) **EUROPEAN PATENT APPLICATION**
published in accordance with Art. 153(4) EPC

(43) Date of publication:
**14.01.2026 Bulletin 2026/03**

(21) Application number: **24785176.9**

(22) Date of filing: **02.04.2024**

(51) International Patent Classification (IPC):
***H01M 50/342*** (2021.01)  ***H01M 50/10*** (2021.01)

(52) Cooperative Patent Classification (CPC):
Y02E 60/10; Y02P 70/50

(86) International application number:
**PCT/KR2024/004259**

(87) International publication number:
**WO 2024/210471 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.04.2023 KR 20230044898**

(71) Applicant: **SK On Co., Ltd.**
**Seoul 03161 (KR)**

(72) Inventors:
• **SHIN, Jae-Sik**
  **Daejeon 34124 (KR)**
• **JU, Seung-Hoon**
  **Daejeon 34124 (KR)**
• **BYUN, Jae-Gyu**
  **Daejeon 34124 (KR)**
• **SEO, Gi-Jeong**
  **Daejeon 34124 (KR)**

(74) Representative: **Stolmár & Partner**
**Patentanwälte PartG mbB**
**Blumenstraße 17**
**80331 München (DE)**

(54) **VENT PLATE AND SECONDARY BATTERY CELL INCLUDING SAME**

(57)    A secondary battery cell according to an embodiment of the present disclosure may include: a case forming an inner space and including an opening on at least one side thereof; an electrode assembly arranged in the inner space and having a negative electrode and a positive electrode alternately stacked with a separator therebetween; a cap plate arranged to cover the opening; and a vent portion that is opened when the inner space reaches a preset pressure range, and includes a base and a notch portion formed in the base, wherein the notch portion satisfies relational expression 1 with the base.

[Relational Expression 1]

$$1.2 < 100*b*c/a < 2.9$$

(a: Thickness of base, b: Width of notch portion, and c: Thickness of notch portion)

[FIG. 1]

**Description**

Technical Field

The present disclosure relates to a vent plate and a secondary battery cell, and more particularly, to a square type secondary battery cell.

Background Art

Unlike primary batteries, secondary batteries may be recharged and reused repeatedly, and used as an energy source in various fields, including digital cameras, laptop computers, mobile devices, electric vehicles, and hybrid vehicles. Lithium secondary batteries are the most common type of secondary battery, but other types thereof include nickel-cadmium and nickel-metal hydride batteries.

These secondary batteries may be manufactured and used as rigid prismatic or cylindrical battery cells or flexible pouch-type battery cells, and for applications requiring high power, such as electric vehicles, they may be used in the form of a battery module including one or more cell stacks in which a plurality of battery cells are stacked, or a battery pack including one or more such battery modules.

Meanwhile, the nature of products utilizing secondary batteries is driving increasing safety requirements. Specifically, in electric vehicles equipped with a plurality of battery cells, there is a risk that a fire in a single battery cell could spread to adjacent cells, triggering a chain reaction of fires and resulting thermal runaway.

To prevent such thermal runaway situations, vent structures are applied to battery cells or battery modules. These vent structures are designed to release the generated gas due to fracture when the internal pressure of the battery cell or module reaches a preset appropriate pressure.

Disclosure of Invention

Technical Problem

The present disclosure provides a secondary battery cell including a vent structure capable of appropriately changing fracture pressure.

Solution to Problem

A secondary battery cell according to an embodiment of the present disclosure may include: a case forming an inner space and including an opening on at least one side thereof; an electrode assembly disposed in the inner space and having an anode and a cathode alternately stacked with a separator interposed therebetween; a cap plate disposed to cover the opening; and a vent portion that is opened when the inner space reaches a preset pressure range, and includes a base and a notch portion formed in the base, and the notch portion and the base may satisfy the following relational expression 1.

$$[Relational\ Expression\ 1]$$

$$1.2 < 100*b*c/a < 2.9$$

(a: base thickness, b: notch portion width, and c: notch portion thickness).

According to an embodiment, a width (b) of the notch portion and a thickness (a) of the base may satisfy the following relational expression 2.

$$[Relational\ Expression\ 2]$$

$$42.8 < 100*b/a < 57.8$$

According to an embodiment, a thickness (c) of the notch portion and a thickness (a) of the base may satisfy the following relational expression 3.

[Relational Expression 3]

14.2 < 100*c/a < 26.4

A width (b) of the notch portion and the thickness (c) of the notch portion may satisfy the following relational expression 4.

[Relational Expression 4]

27.2 < 100*c/b < 55.5

According to an embodiment, the notch portion may be formed on one surface of the base facing the inner space, and may include: a first portion extending in a first direction to pass through a central portion of the base; and a second portion extending from the first portion in a direction, different from the first direction.

According to an embodiment, the first direction may be parallel to a longitudinal direction of the vent portion.

According to an embodiment, the notch portion may further include a third portion extending in the first direction from the second portion so as to be parallel to the first portion, and the second portion may be perpendicular to the first portion and the third portion.

According to an embodiment, the second portion may include: a second-first portion extending in a second direction; and a second-second portion extending in a third direction, intersecting the second direction.

According to an embodiment, the notch portion may have a groove shape having a constant width in a thickness direction of the notch portion.

According to an embodiment, the vent portion may open when the inner space reaches a pressure range of 0.7 to 0.9 MPa.

According to an embodiment, the vent portion may be provided in the case or the cap plate.

According to an embodiment, the vent portion may be welded to the case or the cap plate.

A vent plate according to an embodiment may include: a base coupled to a case or a cap plate of a secondary battery cell; and a notch portion formed on one surface of the base and fractured when an interior of the case reaches a preset pressure range, and the notch portion may include: a first portion extending in a first direction to pass through a central portion of the base; and a second portion extending from the first portion in a direction, different from the first direction, and may satisfy the following relational expression 1.

[Relational Expression 1]

1.2 < 100*b*c/a < 2.9

(a: base thickness, b: notch width, and c: notch thickness)

According to an embodiment, the notch portion may be formed on one surface of the base facing the inner space.

According to an embodiment, the notch portion further may include a third portion extending in the first direction from the second portion so as to be parallel to the first portion, and the second portion may be perpendicular to the first portion and the third portion.

Advantageous Effects of Invention

A secondary battery cell according to an embodiment of the present disclosure has the effect of allowing a vent structure to be fractured under desired pressure conditions.

Brief Description of Drawings

FIG. 1 is a perspective view of a secondary battery cell according to an embodiment of the present disclosure.

FIG. 2 is a cross-sectional view of the secondary battery cell illustrated in FIG. 1.

FIG. 3 is a perspective view of a secondary battery cell according to another embodiment of the present disclosure.

FIG. 4 is a cross-sectional view of the secondary battery cell illustrated in FIG. 3.

FIG. 5 is a drawing illustrating a vent portion according to an embodiment of the present disclosure.

FIG. 6a is a cross-sectional view taken along line I-I' of FIG. 5, and FIG. 6b is a cross-sectional view taken along line II-II' of FIG. 5.

FIG. 7 is an enlarged view of an area corresponding to the notch portion of FIGS. 6a and 6b.

FIG. 8 is a drawing illustrating a vent portion according to another embodiment of the present disclosure.

Mode for the Invention

Hereinafter, with reference to the drawings, specific embodiments of the present disclosure will be described. However, the scope of the present disclosure is not limited to the suggested example embodiments. For example, those skilled in the art who understand the idea of the present disclosure may propose other embodiments included within the scope of the idea of the present disclosure by adding, modifying, or deleting components, but other embodiments are also construed as being in the technical scope of the present disclosure.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure.

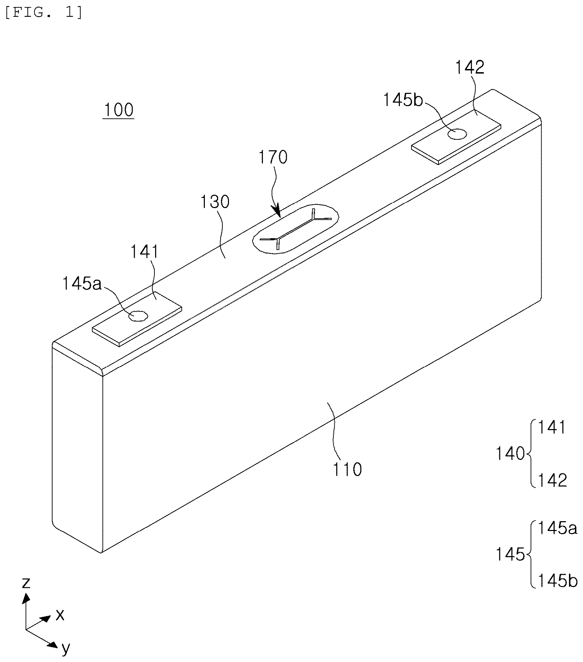

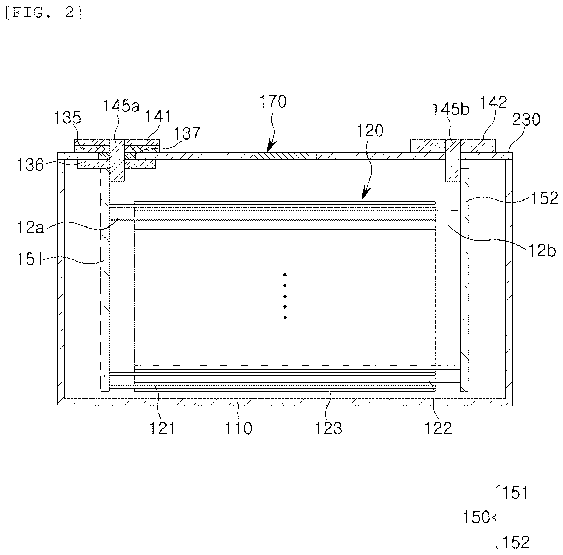

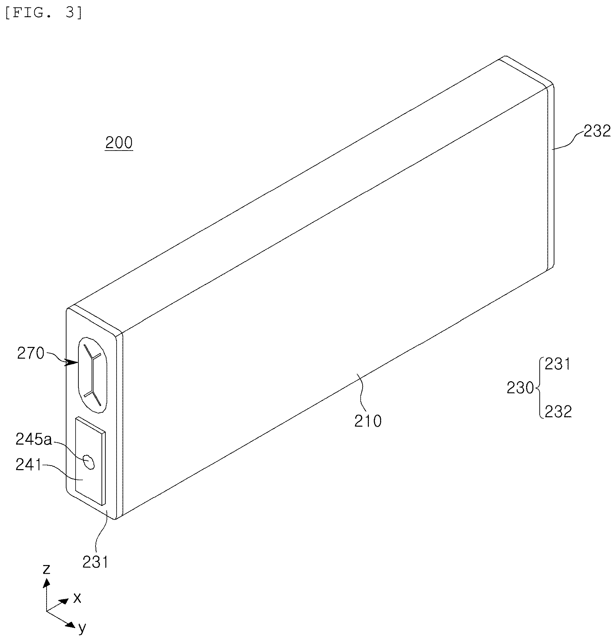

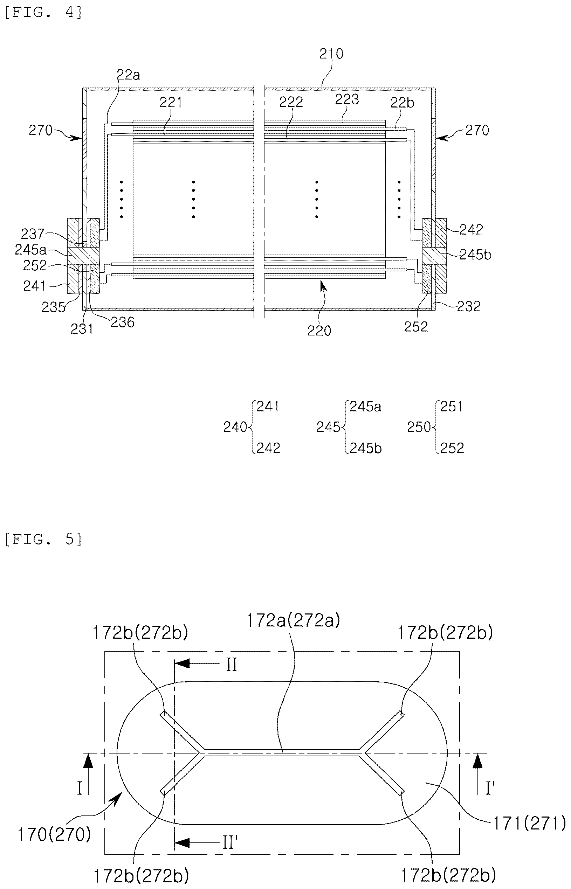

FIG. 1 is a perspective view of a secondary battery cell according to an embodiment of the present disclosure, and FIG. 2 is a cross-sectional view of the secondary battery cell illustrated in FIG. 1. Furthermore, FIG. 3 is a perspective view of a secondary battery cell according to another embodiment of the present disclosure, and FIG. 4 is a cross-sectional view of the secondary battery cell illustrated in FIG. 3.

Secondary battery cells (100, 200) according to an embodiment of the present disclosure may be a square secondary battery cell packaged in a rectangular parallelepiped shape.

Cases (110, 210) of the secondary battery cells (100, 200) according to an embodiment of the present disclosure may have a rectangular parallelepiped shape. The cases (110, 210) may be formed of aluminum, and thus, the cases (110, 210) may be designed to have a cathode polarity.

The cases (110, 210) may form an inner space, and the inner space may accommodate electrode assemblies (120, 220) and an electrolyte.

The electrode assemblies (120, 220) may include anodes (121, 221), cathodes (122, 222), and separators (123, 223). For example, the electrode assemblies (120, 220) may be formed in a form in which the anodes (121, 221) and the anode (122, 222) are alternately stacked with the separators (123, 223) interposed therebetween, or may be formed in a rolled form in a stacked state.

The electrode assemblies (120, 220) may have a length in a direction of a long side of the rectangular parallelepiped cases (110, 210). For example, the anodes (121, 221), the cathodes (122, 222), and the separators (123, 223) may have a length in the direction of the long side of the rectangular parallelepiped cases (110, 210).

The anodes (121, 221) and the cathodes (122, 222) may be formed by coating an electrode active material on a current collector in the form of a thin film (or foil) having a thickness of about 10 $\mu$m. For example, the anodes (121, 221) may be formed by coating an electrode active material such as graphite or carbon on a current collector such as copper, a copper alloy, nickel, or a nickel alloy. On the other hand, the cathodes (122, 222) may be formed by coating an electrode active material such as a transition metal oxide on a current collector such as aluminum or an aluminum alloy. However, the materials of the current collectors and electrode active materials of the anodes (121, 221) and the cathodes (122, 222) are not limited to the materials exemplified above.

Meanwhile, the anodes (121, 221) and the cathodes (122, 222) may include non-coated regions (12, 22), which are regions of the current collector on which the electrode active material is not coated. The non-coated regions (12, 22) may be portions drawn out in a longitudinal direction of the anodes (121, 221) and the cathodes (122, 222). The non-coated regions (12, 22) may be electrically connected to the collector plate (150, 250) to be described below, and may serve as a current flow path between the anodes (121, 221) and the cathodes (122, 222) and an external environment.

The separators (123, 223) may be interposed between the anodes (121, 221) and the cathodes (122, 222) to prevent direct contact between the anodes (121, 221) and the cathodes (122, 222). At the same time, the separators (123, 223) may include microscopic pores on a surface to enable a movement of lithium ions included in an electrolyte. For example, the separators (123, 223) may be formed of polyethylene (PE) or polypropylene (PP). However, the material of the separators (123, 223) is not limited thereto.

The inner space formed by the cases (110, 210) may accommodate an electrolyte together with the electrode assemblies (120, 220). For example, the electrolyte may be obtained by including a lithium salt, such as $LiPF_6$ or $LiBF_4$, in an organic solvent, such as ethylene carbonate (EC), propylene carbonate (PC), diethyl carbonate (DEC), ethyl methyl carbonate (EMC), or dimethyl carbonate (DMC). Furthermore, the electrolyte may be liquid, solid, or gel-like.

According to an embodiment of the present disclosure, the cases (110, 210) may include an opening on at least one side thereof. Cap plates (130, 230) may be disposed in the opening, and the cap plates (130, 230) may be disposed to cover the opening, thereby sealing the inner space.

Referring to FIGS. 1 and 2, the case (110) may include an opening on one side (having a unidirectional type) thereof. For example, the case (110) may include an opening on one side in a Z-direction based on the drawing. In this embodiment, the opening may extend in the longitudinal direction of the case (110), and the cap plate (130) may be disposed to cover the opening.

Meanwhile, referring to FIGS. 3 and 4, the case (210) may include openings on both sides (having a bidirectional type) thereof. For example, the case (210) may include openings on both sides in an X-direction based on the drawings. In this embodiment, the opening may have a length in a height direction of the case (210), and the cap plate (230) may be disposed to cover the opening.

Referring again to FIGS. 1 and 2, the cap plate (130) may be coupled to the case (110) in a state of being disposed to cover the opening. The cap plate (130) may be formed of aluminum and may be welded to the case (110) along a circumference of the opening.

The cap plate (130) may include electrode terminals (140: 141, 142). For example, the cap plate (130) may include an anode terminal (141) and a cathode terminal (142). The anode terminal (141) may be electrically connected to the anode (121) of the electrode assembly (120) and have an anode polarity, and the cathode terminal (142) may be electrically connected to the cathode electrode (122) of the electrode assembly (120) and have a cathode polarity.

The anode terminal (141) and the cathode terminal (142) may be provided in the form of plates and may be spaced apart from each other in a longitudinal direction on one surface of the cap plate (130). One surface of the cap plate (130) may refer to a surface opposing a surface facing the inner space. However, the anode terminal (141) and the cathode terminal (142) are not limited to the aforementioned embodiments, as long as they are electrically connectable to the outside.

The anode terminal (141) and the cathode terminal (142) may be electrically connected to the collector plate (150: 151, 152). The collector plate (150) may be connected to the non-coated portion (12: 12a, 12b) of the electrode assembly (120) and thus have either an anode polarity or a cathode polarity. The anode terminal (141) may be electrically connected to an anode collector plate (151) to which the non-coated portion (12a) of the anode (121) is welded, and the cathode terminal (142) may be electrically connected to a cathode collector plate (152) to which the non-coated portion (12b) of the cathode electrode (122) is welded.

Referring to FIGS. 1 and 2, the anode terminal (141) and the cathode terminal (142) may be electrically connected to the collector plate (150) via a connection pin (145: 145a, 145b), respectively. For example, a through-hole may be formed in the cap plate (130) and the electrode terminal (140), and the connection pin (145) may be disposed to pass through the through-hole. One side of the connection pin (145) may be welded to the current collector (150), and the other side thereof may be welded to the electrode terminal (140).

According to an embodiment of the present disclosure, since the case (110) and the cap plate (130) of the secondary battery cell (100) have a cathode polarity, an insulating member may be additionally disposed between a member having the anode polarity and the cap plate (130).

For example, first to third insulating members (135, 136, 137) may be disposed on one surface and the other surface of the cap plate (130), and within the through-hole of the cap plate (130). For example, the first insulating member (135) disposed on one surface of the cap plate (130) may be disposed between the cap plate (130) and the anode terminal (141) to electrically insulate the cap plate (130) and the anode terminal (141). The second insulating member (136) disposed on the other surface of the cap plate (130) may be disposed between the cap plate (130) and an anode current collector (151). In addition, the third insulating member (137) disposed within the through-hole of the cap plate (130) may electrically insulate the cap plate (130) and the connection pin (145a) disposed within the through-hole.

Meanwhile, as described above, in a state in which the connection pin (145) is disposed in the through-holes of the cap plate (130) and the electrode terminal (140), one end and the other end thereof may be welded to the collector plate (150) and the electrode terminal (140), respectively, and thus, all components disposed between the electrode terminal (140) and the collector plate (150) may have through-holes. For example, the cap plate (130) and the first to third insulating members (135, 136, 137) disposed between the anode terminal (141) and the anode collector plate (151) may all include through-holes, and the anode connection pin (145a) may be disposed to pass through the through-holes. Specifically, the third insulating member (137) may be disposed in the through-hole of the cap plate (130), and the anode connection pin (145a) may be disposed in the through-hole of the third insulating member (137). Accordingly, the anode connection pin (145a) and the cap plate (130) may be electrically insulated by the third insulating member (137).

Referring to FIGS. 3 and 4, the case (210) may include openings on both sides in a longitudinal direction, and the cap plates (230: 230a, 230b) may be disposed to cover each opening. The cap plate (230) may be formed of aluminum and may be welded to the case (210) along the circumference of the opening.

The cap plate (230) may include electrode terminals (240: 241, 242). For example, the cap plate (230) may include an anode terminal (241) or a cathode terminal (242). Hereinafter, the first cap plate (230a) may refer to a cap plate including the anode terminal (241), and the second cap plate (230b) may refer to a cap plate including the cathode terminal (242).

As described above, the anode terminal (241) may be electrically connected to the anode (221) of the electrode assembly (220) and thus have an anode polarity, and the cathode terminal (242) may be electrically connected to the cathode (222) of the electrode assembly (220) and thus have a cathode polarity.

The anode terminal (241) and the cathode terminal (242) may be provided in a plate shape and disposed on one surface of the cap plate (230). The one surface of the cap plate (230) may refer to a surface opposing a surface facing the inner space. However, the anode terminal (241) and the cathode terminal (242) are not limited to the aforementioned embodiment, as long as they are electrically connected to the outside.

The anode terminal (241) and the cathode terminal (242) may be electrically connected to the collector plates (250: 251, 252). The collector plate (250) may be connected to the non-coated portions (22: 22a, 22b) of the electrode assembly (220) and may have either an anode polarity or a cathode polarity. The anode terminal (241) may be electrically connected to the anode collector plate (251) to which the non-coated portion (22a) of the anode (221) is welded, and the cathode terminal (242) may be electrically connected to the cathode collector plate (252) to which the non-coated portion (22b) of the cathode (222) is welded.

Referring to FIGS. 3 and 4, the anode terminal (241) and the cathode terminal (242) may be electrically connected to the current collector plate (250) via the connection pins (245: 245a, 245b), respectively. For example, through-holes may be formed in the cap plate (230) and the electrode terminal (240), and the connection pin (245) may be disposed to pass through the through-holes. One side of the connection pin (245) may be welded to the current collector plate (250) and the other side thereof may be welded to the electrode terminal (240).

According to an embodiment of the present disclosure, since the case (210) and the cap plate (230) of the secondary battery cell (200) have a cathode polarity, an insulating member may be additionally disposed between a member having an anode polarity and the cap plate (230).

For example, an insulating member may be additionally disposed between the member having the anode polarity and the first cap plate (231). First to third insulating members (235, 236, 237) may be disposed on one surface and the other surface of the first cap plate (231) and in the through-hole of the first cap plate (231). For example, the first insulating member (235) disposed on one surface of the first cap plate (231) may be disposed between the first cap plate (231) and the anode terminal (241) to electrically insulate the first cap plate (231) from the anode terminal (241). The second insulating member (236) disposed on the other surface of the first cap plate (231) may be disposed between the first cap plate (231) and the anode current collector (251). Additionally, the third insulating member (237) disposed within the through-hole of the first cap plate (231) may electrically insulate the first cap plate (231) from the connection pin (245a) disposed within the through-hole.

Meanwhile, as described above, in a state in which the connection pin (245) is disposed within the through-hole of the cap plate (230) and the electrode terminal (240), one end and the other end thereof may be welded to the current collector plate (250) and the electrode terminal (240), respectively, and thus, all components disposed between the electrode terminal (240) and the current collector plate (250) may have through-holes. For example, the first cap plate (231) and the first to third insulating members (235, 236, 237) disposed between the anode terminal (241) and the anode current collector plate (251) may all include through-holes, and the anode connection pin (245a) may be disposed to pass through the through-hole. Specifically, the third insulating member (237) may be disposed in the through-hole of the first cap plate (231), and the anode connection pin (245a) may be disposed in the through-hole of the third insulating member (237). Accordingly, the anode connection pin (245a) and the first cap plate (231) may be electrically insulated by the third insulating member (237).

According to an embodiment of the present disclosure, the secondary battery cells (100, 200) may include vent portions (or vent plates) (170, 270). Hereinafter, with reference to FIGS. 5 to 7, the vent portions (170, 270) according to an embodiment of the present disclosure will be described.

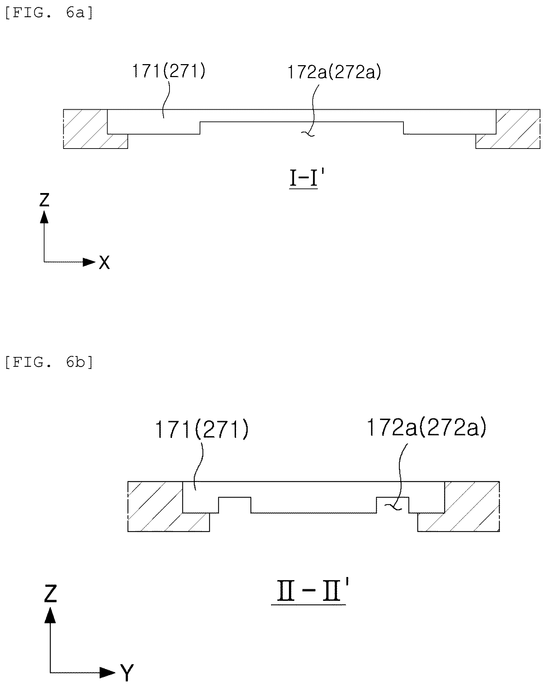

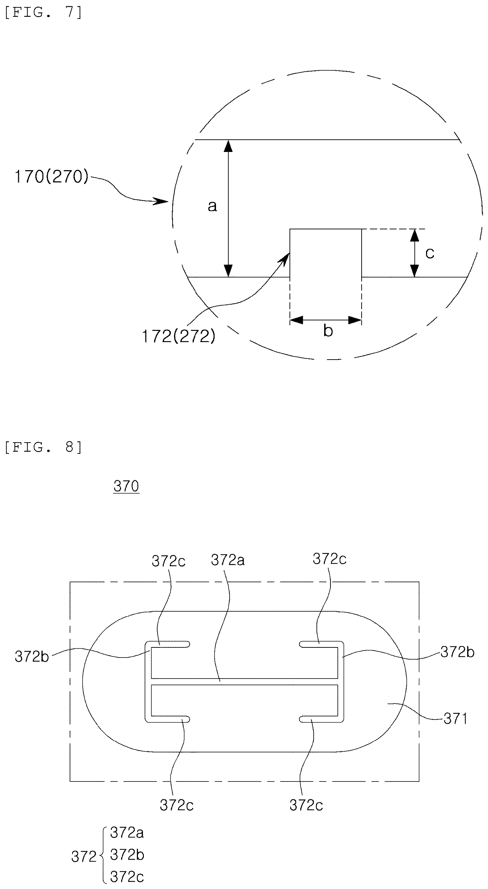

FIG. 5 is a view illustrating a vent portion according to an embodiment of the present disclosure, FIG. 6a is a cross-sectional view taken along line I-I' of FIG. 5, FIG. 6b is a cross-sectional view taken along line II-II' of FIG. 5, FIG. 7 is an enlarged view of a region corresponding to a notch portion of FIGS. 6a and 6b, and FIG. 8 is a view illustrating a vent portion according to another embodiment of the present disclosure.

Vent portions (170, 270) may be configured to prevent explosion of the secondary battery cells (100, 200). For example, repeated charging and discharging of the secondary battery cells (100, 200) may generate gas within the cases (110, 210), and when internal pressure of the cases (110, 210) reaches a predetermined level due to the generated gas, the gas within the cases (110, 210) may be discharged to the outside through the vent portions (170, 270).

In an embodiment, the vent portions (170, 270) may be provided on the cap plates (130, 230), as illustrated in FIGS. 1 and 3.

The vent portions (170, 270) may include bases (171, 271) formed in a plate shape. The bases (171, 271) may be formed of aluminum and may be coupled to the cap plates (130, 230). For example, the cap plates (130, 230) may include an opening into which the bases (171, 271) are coupled, and the bases (171, 271) may be welded to the cap plates (130, 230) along the circumference of the opening.

Meanwhile, in another embodiment, the vent portions (170, 270) may be provided in the cases (110, 210). In this case, the cases (110, 210) may include an opening into which the bases (171, 271) of the vent portions (170, 270) are coupled, and the bases (171, 271) may be welded to the cases (110, 210) along the circumference of the opening. In this case, the vent portions (170, 270) may be provided on a different surface from a surface on which the cap plates (130, 230) of the cases (110, 210) are provided.

Notch portions (172, 272) may be formed on the bases (171, 271). The notch portions (172, 272) may be relatively thinner than other portions of the bases (171, 271) and, for example, may be in the form of grooves having a predetermined width and depth (or thickness). The notch portions (172, 272) may be formed on one surface of the bases (171, 271) facing the inner space. That is, the notch portions (172, 272) may be provided in the form of continuous grooves on one surface of the bases (171, 271). Furthermore, the notch portions (172, 272) may be in the form of grooves having a predetermined width in a thickness direction of the notch portions (172, 272).

The notch portions (172, 272) may have any shape. For example, the notch portions (172, 272) may have a symmetrical shape. Furthermore, the notch portions (172, 272) may include first portions (172a, 272a) and second portions (172b, 272b) extending from the first portions (172a, 272a).

The first portions (172a, 272a) may be portions extending in a first direction to pass through the center of the bases (171, 271). For example, the first direction may be parallel to a longitudinal direction of the bases (171, 271). However, the first direction may also be a different direction. Meanwhile, the notch portions (172, 272) may include a plurality of first portions (172a, 272a). In this case, the first direction may be applied differently to the respective first portions (172a, 272a).

The second portions (172b, 272b) may be portions extending in a direction different from the first direction from the first portions (172a, 272a). The second portions (172b, 272b) may extend from one end and the other end of the first portions (172a, 272a), respectively. Furthermore, each of the one end and the other end of the first portions (172a, 272a) may include a plurality of second portions (172b, 272b). In an embodiment, the plurality of second portions (172b, 272b) may extend from one end and the other end of the first portions (172a, 272a), and the second portions (172b, 272b) may extend in different directions. For example, the second portions (172b, 272b) may include a second-first portion extending in the second direction and a second-second portion extending in the third direction.

FIG. 8 illustrates a vent portion (370) according to another embodiment of the present disclosure. The notch portion (372) of the vent portion (370) illustrated in FIG. 8 may include a first portion (372a) extending in the first direction to pass through a central portion of the base (371) and a second portion (372b) extending from the first portion (372a) in a direction, different from the first direction, similarly to the notch portions (172, 272) of the vent portions (170, 270) according to the previously described embodiments. Furthermore, the notch portion (372) in FIG. 8 may further include a third portion (372c) extending in the first direction from the second portion (372b) so as to be parallel to the first portion (372a). Furthermore, the second portion (372b) may be perpendicular to the first portion (372a) and the third portion (372c).

According to an embodiment of the present disclosure, the vent portions (170, 270) may be designed to be fractured at a pressure of 0.7 MPa or more and 0.9 MPa or less within the inner space. Specifically, when the inner space of the secondary battery cells (100, 200) reaches the above-described pressure range, the notch portions (172, 272) of the vent portions (170, 270) may be cut and gas generated within the inner space may be simultaneously discharged to the outside. The vent portions (170, 270) according to an embodiment of the present disclosure may be designed to be fractured at the most preferable pressure in terms of improved battery lifespan and securement of safety.

Meanwhile, the vent portions (170, 270) may be deformed by heat generated when the bases (171, 271) are welded to the cap plates (130, 230) or the cases (110, 210), which may cause the vent portions (170, 270) to be fractured before reaching the preset pressure conditions. Furthermore, the vent portions (170, 270) have limitations in controlling a fracture pressure range without changing the shape of the notch portions (172, 272).

According to an embodiment of the present disclosure, the vent portions (170, 270) may be designed so that the bases (171, 271) and the notch portions (172, 272) satisfy at least one of the following relational expressions, and thus, despite the aforementioned problems, the vent portions (170, 270) may be fractured under the preset pressure conditions.

Referring to FIG. 7, when a thickness of the bases (171, 271) is defined as a, a width of the notch portions (172, 272) is defined as b, and a thickness of the notch portions (172, 272) is defined as c, the bases (171, 271) and the notch portions (172, 272) may satisfy the following relational expression 1.

[Relational Expression 1]

$$1.2 < 100*b*c/a < 2.9$$

According to the embodiment of the present disclosure, a point at which the vent portions (170, 270) are fractured may be correlated with an area of the notch portions (172, 272) (i.e., the width (b) and the thickness (c) of the notch portions (172, 272)) and the thickness (a) of the bases (171, 271), and when the vent portions (170, 270) are designed to satisfy relational expression 1 above, the vent portions (170, 270) may be fractured within the aforementioned pressure range.

Furthermore, based on the correlation, the bases (171, 271) and the notch portions (172, 272) of the vent portions (170, 270) may further satisfy the following relational expression 2 to 4.

[Relational Expression 2] 42.8 < 100*b/a < 57.8

[Relational Expression 3] 14.2 < 100*c/a < 26.4

[Relational Expression 4] 27.2 < 100*c/b < 55.5

According to an embodiment of the present disclosure, the thickness (a) of the bases (171, 271) and the width (b) and thickness (c) of the notch portions (172, 272) may be constant (with a margin of error of 0.01 mm). Specifically, the bases (171, 271) may have a thickness (a) within a range of 0.2 mm ($\pm$0.01 mm).

As described above, the vent portions (170, 270) of the secondary battery cells (100, 200) according to an embodiment of the present disclosure may be fractured under desired pressure conditions with high reliability by controlling the area and/or thickness of the notch portions (172, 272).

Although the configurations and characteristics of the present disclosure have been described based on the example embodiment of the present disclosure, the present disclosure is not limited thereto. It will be apparent to those skilled in the art to which the present disclosure belongs that various changes or modifications may be made within the concept and scope of the present disclosure, and thus it will be revealed that such changes or modifications fall within the scope of the appended claims.

**Claims**

1. A secondary battery cell, comprising:

   a case forming an inner space and including an opening on at least one side thereof;
   an electrode assembly disposed in the inner space and having an anode and a cathode alternately stacked with a separator interposed therebetween;
   a cap plate disposed to cover the opening; and
   a vent portion that is opened when the inner space reaches a preset pressure range, and includes a base and a notch portion formed in the base,
   wherein the notch portion and the base satisfy the following relational expression 1,

   [Relational Expression 1]

   1.2 < 100*b*c/a < 2.9

   (a: base thickness, b: notch portion width, and c: notch portion thickness).

2. The secondary battery cell of claim 1, wherein a width (b) of the notch portion and a thickness (a) of the base satisfies the following relational expression 2,

   [Relational Expression 2]

   42.8 < 100*b/a < 57.8.

3. The secondary battery cell of claim 1, wherein a thickness (c) of the notch portion and a thickness (a) of the base satisfy the following relational expression 3,

EP 4 679 603 A1

[Relational Expression 3]

$$14.2 < 100*c/a < 26.4.$$

4. The secondary battery cell of claim 1, wherein a width (b) of the notch portion and the thickness (c) of the notch portion satisfy the following relational expression 4,

[Relational Expression 4]

$$27.2 < 100*c/b < 55.5.$$

5. The secondary battery cell of claim 1, wherein the notch portion is formed on one surface of the base facing the inner space, and includes:

   a first portion extending in a first direction to pass through a central portion of the base; and
   a second portion extending from the first portion in a direction, different from the first direction.

6. The secondary battery cell of claim 5, wherein the first direction is parallel to a longitudinal direction of the vent portion.

7. The secondary battery cell of claim 6, wherein the notch portion further includes a third portion extending in the first direction from the second portion so as to be parallel to the first portion, and
   the second portion is perpendicular to the first portion and the third portion.

8. The secondary battery cell of claim 5, wherein the second portion includes:

   a second-first portion extending in a second direction; and
   a second-second portion extending in a third direction, intersecting the second direction.

9. The secondary battery cell of claim 1, wherein the notch portion has a groove shape having a constant width in a thickness direction of the notch portion.

10. The secondary battery cell of claim 1, wherein the vent portion opens when the inner space reaches a pressure range of 0.7 to 0.9 MPa.

11. The secondary battery cell of claim 1, wherein the vent portion is provided in the case or the cap plate.

12. The secondary battery cell of claim 1, wherein the vent portion is welded to the case or the cap plate.

13. A vent plate, comprising:

   a base coupled to a case or a cap plate of a secondary battery cell; and
   a notch portion formed on one surface of the base and fractured when an interior of the case reaches a preset pressure range,
   wherein the notch portion includes:

   a first portion extending in a first direction to pass through a central portion of the base; and
   a second portion extending from the first portion in a direction, different from the first direction,
   and
   satisfies the following relational expression 1,

[Relational Expression 1]

$$1.2 < 100*b*c/a < 2.9$$

(a: base thickness, b: notch width, and c: notch thickness).

9

**14.** The vent plate of claim 13, wherein the notch portion is formed on one surface of the base facing the inner space.

**15.** The vent plate of claim 13, wherein the notch portion further includes a third portion extending in the first direction from the second portion so as to be parallel to the first portion, and
the second portion is perpendicular to the first portion and the third portion.

[FIG. 1]

[FIG. 2]

[FIG. 3]

[FIG. 4]

$240 \begin{cases} 241 \\ 242 \end{cases}$  $245 \begin{cases} 245a \\ 245b \end{cases}$  $250 \begin{cases} 251 \\ 252 \end{cases}$

[FIG. 5]

[FIG. 6a]

171(271)  172a(272a)

I-I'

Z
↑
→ X

[FIG. 6b]

171(271)  172a(272a)

II - II'

Z
↑
→ Y

[FIG. 7]

170(270)

a

172(272)

b

c

[FIG. 8]

370

372c    372a    372c

372b                    372b

371

372c    372c

372 { 372a
      372b
      372c

## INTERNATIONAL SEARCH REPORT

| International application No. |
| --- |
| **PCT/KR2024/004259** |

| | |
| --- | --- |
| **A.** | **CLASSIFICATION OF SUBJECT MATTER** |
| | **H01M 50/342**(2021.01)i; **H01M 50/10**(2021.01)i |

According to International Patent Classification (IPC) or to both national classification and IPC

| | |
| --- | --- |
| **B.** | **FIELDS SEARCHED** |

Minimum documentation searched (classification system followed by classification symbols)

H01M 50/342(2021.01); H01M 2/02(2006.01); H01M 2/04(2006.01); H01M 2/12(2006.01); H01M 2/34(2006.01); H01M 50/10(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지 셀(secondary battery cell), 케이스(case), 캡 플레이트(cap plate), 노치부 (notch part), 벤트부(vent part)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | KR 10-2018-0007189 A (SAMSUNG SDI CO., LTD.) 22 January 2018 (2018-01-22) See paragraphs [0027] and [0055]-[0059], claims 1-3 and figures 1-3d. | 1-6,8,11,13,14 |
| Y | | 7,9,10,12,15 |
| Y | KR 10-2012-0016469 A (SB LIMOTIVE CO., LTD.) 24 February 2012 (2012-02-24) See paragraphs [0032]-[0038] and figures 3-4. | 7,9,10,12,15 |
| A | KR 10-2012-0095158 A (SAMSUNG SDI CO., LTD.) 28 August 2012 (2012-08-28) See paragraphs [0023]-[0043], claim 1 and figures 1-5. | 1-15 |
| A | KR 10-2014-0031348 A (LG CHEM, LTD.) 12 March 2014 (2014-03-12) See paragraphs [0086]-[0089] and figure 6. | 1-15 |
| A | KR 20-0388805 Y1 (ILKWANG CANTECH CO., LTD.) 07 July 2005 (2005-07-07) See claim 4 and figures 1-2. | 1-15 |

| ☐ Further documents are listed in the continuation of Box C. | ☑ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 July 2024** | **04 July 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/004259**

| Patent document cited in search report | | | Publication date (day/month/year) | Patent family member(s) | | | Publication date (day/month/year) |
|---|---|---|---|---|---|---|---|
| KR | 10-2018-0007189 | A | 22 January 2018 | CN | 109314202 | A | 05 February 2019 |
| | | | | CN | 109314202 | B | 20 August 2021 |
| | | | | EP | 3486969 | A1 | 22 May 2019 |
| | | | | EP | 3486969 | B1 | 16 December 2020 |
| | | | | KR | 10-2629177 | B1 | 26 January 2024 |
| | | | | US | 11502327 | B2 | 15 November 2022 |
| | | | | US | 2019-0260069 | A1 | 22 August 2019 |
| | | | | WO | 2018-012709 | A1 | 18 January 2018 |
| KR | 10-2012-0016469 | A | 24 February 2012 | KR | 10-0990156 | B1 | 29 October 2010 |
| | | | | KR | 10-1223522 | B1 | 17 January 2013 |
| | | | | KR | 10-2009-0131019 | A | 28 December 2009 |
| | | | | US | 2012-0040213 | A1 | 16 February 2012 |
| | | | | US | 9142814 | B2 | 22 September 2015 |
| KR | 10-2012-0095158 | A | 28 August 2012 | US | 2012-0219834 | A1 | 30 August 2012 |
| KR | 10-2014-0031348 | A | 12 March 2014 | KR | 10-1516649 | B1 | 04 May 2015 |
| KR | 20-0388805 | Y1 | 07 July 2005 | None | | | |

Form PCT/ISA/210 (patent family annex) (July 2022)